# EUROPÄISCHE PATENTANMELDUNG

(11) **EP 4 472 063 A1**
(43) Veröffentlichungstag der Anmeldung: **04.12.2024**
(21) Anmeldenummer: 23177027.2
(22) Anmeldetag: 02.06.2023
(51) Int. Cl.: H02P 29/62, H02P 21/00

(54) **UMRICHTERBASIERTE HEIZFUNKTION EINER DYNAMOELEKTRISCHEN MASCHINE**

(71) Anmelder: Siemens Aktiengesellschaft, 80333 München (DE)
(72) Erfinder: Spindler, Carsten, 91058 Erlangen (DE); Streubühr, Martin, 90513 Zirndorf (DE); Wieder, Alexander, 91056 Erlangen (DE)
(74) Vertreter: Siemens Patent Attorneys

(57) **Zusammenfassung**

Die Erfindung betrifft ein Antriebssystem (10) mit zumindest einer dynamoelektrischen Maschine (1) und einem Umrichter (8), wobei der Umrichter (8) eine Regelungseinheit (20) mit einer feldorientierten Regelung aufweist, die momentenbildende und/oder feldbildende Stromkomponenten der dynamoelektrischen Maschine (1) zur Verfügung stellt, wobei über Temperaturdaten (21,22) der dynamoelektrischen Maschine (1) oder deren Komponenten die auszuregelnde Temperaturdifferenz bestimmbar ist.

## Beschreibung

Die Erfindung betrifft ein Antriebssystem mit zumindest einer dynamoelektrischen Maschine und einem Umrichter, als auch ein Verfahren zur Temperaturregelung einer dynamoelektrischen Maschine als Teil eines Antriebssystems mit zumindest einem Umrichter.

Ferner betrifft die Erfindung auch die Verwendung eines derartigen Temperatursystem bei Antriebssystemen im industriellen und energieerzeugenden Umfeld.

Bei Antriebssystem mit einer dynamoelektrischen Maschine kann die korrekte Funktion der elektrischen Maschinen nur in bestimmten Temperaturbereichen garantiert werden. Ebenso wie Übertemperaturen können auch Untertemperaturen zu Schäden führen bzw. die Funktionsweise der dynamoelektrischen Maschine beeinträchtigen. Dies ist sowohl für die Temperierung des Stators und/oder Rotors, als auch für die dem Antriebssystem benachbarte Komponenten, wie Bremsen oder Lager relevant. Neben den direkten Auswirkungen auf die Funktion können auch weitere Einflüsse, wie eine zu hohe Luftfeuchtigkeit bei niedrigen Temperaturen zu Schäden an der dynamoelektrischen Maschine führen. Aufgrund der Kondensation von Wasser in feuchter Umgebung bei langen Standzeiten können ebenso Korrosionen an der dynamoelektrischen Maschine entstehen.

So müssen beispielsweise Windkraftanlagen in nördlichen Regionen bei -30°C hochgefahren und eingeschalten werden. Dabei eingesetzte Komponenten, wie eine Betriebsbreme müssen vor dem Einschalten auf z.B. -15°C erwärmt werden.

Werkzeugmaschinen sind wegen des Einsatzes von Kühlschmierstoffen einer hohen Luftfeuchtigkeit ausgesetzt. Bei der Bearbeitung kühlen dabei einzelne Linearmotoren aufgrund von langen spezifischen Standzeiten stark ab. In dieser Zeit setzt sich Kondenswasser am Motor ab und wird teilweise trotz Dichtung in den Linearmotor eingezogen. Das kondensierende Wasser verursacht hier Korrosion und somit Motorschäden.

Um Schäden am Motor bzw. anderen elektrischen Komponenten zu verhindern, sind externe Heizsysteme für die betroffene elektrische Komponente bekannt.

Ebenso wie externe Erwärmungsmöglichkeiten existieren bereits interne Heizfunktionen. Auf dem Feld der Klimaanwendungen wird zur Erwärmung des Stators z.B. mithilfe einer zusätzlichen elektrischen Schaltung ein fester Gleichstrom durch zwei der drei Wicklungen des Stators geleitet.

Des Weiteren gibt es Motoren, die am Umrichter betrieben werden. Bei feldorientierter Regelung gibt es die Möglichkeit, über einen konstanten d-Strom die Wicklung des Motors zu erwärmen, wie dies aus der EP 3 686 046 A1 bekannt ist.

Falls über diesen bekannten Mechanismus, die interne Heizfunktion eines Motors über einen konstanten feldbildenden Strom, der Rotor bzw. am Rotor angeschlossene Komponenten erwärmt werden sollen, dauert diese Temperierung vergleichsweise lange, da bei einem konstanten feldbildenden Strom die Verluste und damit eine direkte Erwärmung ausschließlich in den Statorwicklungen erzeugt wird. Der Rotor oder die am Rotor angeschlossenen mechanischen Komponenten, z.B. die Bremse, werden nur indirekt erwärmt (Wärmeübertragung über Luftspalt und mechanische Verbindungen).

Ausgehend davon liegt der Erfindung die Aufgabe zugrunde bei einem Antriebssystem, insbesondere mit einer dynamoelektrischen Maschine die Temperaturregelung zu verbessern. Dabei soll außerdem die Temperaturregelung an einem derartigen Antriebssystem, insbesondere für Antriebe in der industriellen Produktion und Energieerzeugung nachrüstbar sein.

Die Lösung der gestellten Aufgabe gelingt durch ein Antriebssystem mit zumindest einer dynamoelektrischen Maschine und einem Umrichter, wobei der Umrichter eine Regelungseinheit mit einer feldorientierten Regelung aufweist, die momentenbildende und/oder feldbildende Stromkomponenten der dynamoelektrischen Maschine zur Verfügung stellt, wobei über Temperaturdaten der dynamoelektrischen Maschine oder deren Komponenten die auszuregelnde Temperaturdifferenz bestimmbar ist.

Die Lösung der gestellten Aufgabe gelingt auch durch ein Verfahren zur Temperaturregelung einer dynamoelektrischen Maschine als Teil eines Antriebssystems mit zumindest einem Umrichter, insbesondere Erwärmung einer dynamoelektrischen Maschine,
wobei der Umrichter eine Regelungseinheit mit einer feldorientierten Regelung aufweist, die der dynamoelektrischen Maschine momentenbildende und feldbildende Stromkomponenten zur Verfügung stellt,
wobei über Temperaturdaten der dynamoelektrischen Maschine die auszuregelnde Temperaturdifferenz bestimmt wird,
wobei durch ein Soll-/Istwertvergleich die auszuregelnde Temperaturdifferenz bestimmt wird,
wobei durch die Regelung, insbesondere einen PI-Regler eine Amplitude des feldbildenden Stromes vorgegeben wird.

Die Lösung der gestellten Aufgabe gelingt auch durch die Verwendung eines erfindungsgemäßen Antriebssystems mit einem erfindungsgemäßen Verfahren in der Produktionstechnik und Energieerzeugung in Produktionsmaschinen, Werkzeugmaschinen, Windkraftanlagen, Kompressor-, Lüfter- und Pumpenanwendungen, Industrierobotern, Prüfständen, Klimakammeranwendungen und Transportsystemen.

Erfindungsgemäß wird die dynamoelektrische Maschine über einen feldbildenden Wechselstrom erwärmt. Dabei wird über die feldorientierte Regelung, zwischen den beiden Stromkomponenten, dem momentenbildenden und feldbildenden Strom, unterschieden und diese werden getrennt voneinander angesteuert.

Für die Berechnung des Heizstroms kommt beispielsweise eine PI-Regelung zum Einsatz. Als Eingang wird die aktuelle Temperatur der dynamoelektrischen Maschine, als Ausgang der feldbildende Strom verwendet. Diese Temperatur wird über an der Statorwicklung der dynamoelektrischen Maschine verbaute Sensoren erfasst.

Alternativ ist auch die Verwendung externer Sensoren oder eines auf wenigen Temperaturdaten beruhenden Temperaturmodells möglich.

Mithilfe eines Soll-/Istwert-Vergleichs wird die auszuregelnde Temperaturdifferenz bestimmt. Die von dem PI-Regler vorgegebene Strom-Amplitude für den feldbildenden Strom wird anschließend über einen einstellbaren Maximalstrom begrenzt.

Die Amplitude wird nun mittels eines Sinus-Generators in einen Wechselstrom umgewandelt. Dieser ermöglicht eine besonders schnelle Erwärmung des Rotors bzw. der Sekundärseite der dynamoelektrischen Maschine, da durch das wechselnde Feld nicht nur elektrische Verluste im Stator, sondern auch Wirbelstromverluste im Rotor zur Wärmeentwicklung, insbesondere des Rotors beitragen. Im Gegensatz zu den bisherigen Lösungen wird bei dem erfindungsgemäßen Verfahren ein feldbildender Wechselstrom verwendet, der gewollt zusätzliche Wirbelstromverluste im Rotor erzeugt und dadurch zu einer schnelleren Erwärmung des Rotors führt.

Der dabei eingesetzte Sinus-Generator arbeitet aus Gründen der Effizienz beispielsweise mit einer numerischen Approximation mittels Taylor-Reihen-Entwicklung.

Im Unterschied zu den bisherigen Lösungen wird anstatt von zwei Betriebsmodi eine Abschaltschwelle verwendet, so dass Motorfunktion und Heizfunktion gleichzeitig benutzt werden können. In Abhängigkeit eines momentenbildenden Stroms kann der von der Temperatur-Regelung berechnete feldbildende Wechselstrom wahlweise einprägt werden.

Mit anderen Worten - dies führt zu einer Motorfunktion mit einstellbarer Heizfunktion oder zu einer gewollt "reinen" Motorfunktion.

Durch diese Einführung der Abschaltschwelle des momentenbildenden Stroms ist ein gleichzeitiger Betrieb der Heiz- und Motorfunktion möglich. Die Abschaltschwelle ermöglicht im Gegensatz zur Verwendung von mehreren Betriebsmodi auch eine Temperaturregelung im laufenden Betrieb der dynamoelektrischen Maschine. Wenn im normalen Betrieb der momentenbildende Strom unterhalb der Abschaltschwelle liegt, wird automatisch die Temperaturregelung freigegeben und ein passender feldbildender Strom eingeprägt.

Das Drehmoment wird nur indirekt über den momentenbildenden Strom begrenzt. Die Grenze für den momentenbildenden Strom sollte an den maximalen feldbildenden Strom angepasst werden, damit eine dauerhafte Einprägung über Nennstrom vermieden wird. Im Ausnahmefall sind auch höhere Ströme möglich.)

Somit kann bei geringen aufzubringenden Momenten und im Teillastbereich während des normalen Motor-Betriebs über einen zusätzlichen feldbildenden Strom geheizt werden. Für diesen gleichzeitigen Betrieb kann alternativ ggf. der Sinus-Generator ausgeschaltet werden, um einen feldbildenden Gleichstrom einzuprägen. Bei gleichzeitigem motorischem Betrieb hat ein feldschwächender Gleichstrom weniger Rückwirkungen auf die Regelung des momentenbildenden Stroms.

Mit anderen Worten: Bei gleichzeitiger Heizfunktion und Motorfunktion können störende Einflüsse des feldbildenden Heizstroms auf die Motorfunktion auftreten, beispielsweise einen unrunden Lauf und Kraftverluste. Die Rückwirkungen lassen sich durch eine reine Gleichstrom- im Vergleich zur Wechselstromeinprägung reduzieren.

Die PI-Regelung ermöglicht im Vergleich zur Zweipunktregelung ein Ausregeln der Temperatur auf eine konstante Solltemperatur. Damit wird die Gefahr reduziert, dass der Motor überhitzt, indem bereits vor Erreichen der Solltemperatur der feldbildende Strom reduziert wird.

Ein weiteres Unterscheidungsmerkmal zu bisherigen Lösungen ist die Anwendung bei Linearmotoren. Der größte Unterschied zu rotatorischen Maschinen ist die thermische Kopplung zwischen Primär- und Sekundärseite. Hier macht sich besonders die Verwendung von Wechselstrom bemerkbar, da so direkt Wirbelstromverluste auf der Sekundärseite für eine schnellere Erwärmung sorgen.

Da die erfindungsgemäße Ausgestaltung eines Antriebssystems keine zusätzlichen Hardware-Komponenten benötigt bzw. für die Umsetzung keine mechanischen Umbaumaßnahmen notwendig sind, ist auch eine einfache Nachrüstung bei bereits existierenden Antriebssystemen möglich.

Die Erfindung sowie weitere vorteilhafte Ausgestaltungen der Erfindung werden anhand prinzipiell dargestellter Ausführungsbeispiele näher erläutert, darin zeigen:
- FIG 1: Darstellung einer prinzipiellen dynamoelektrischen Maschine,
- FIG 2: Regelkreis der Heizfunktion.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 4 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 4 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

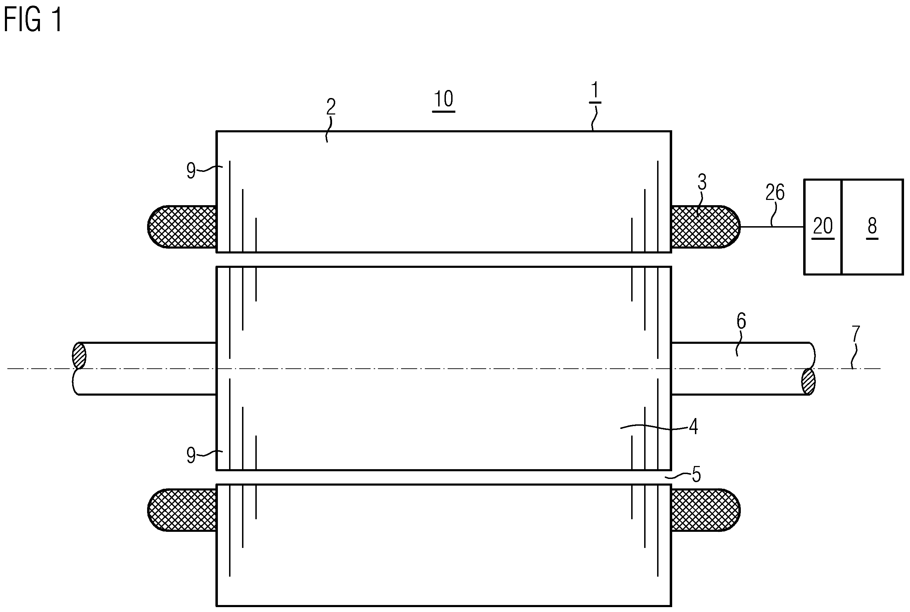

FIG 1 zeigt ein Antriebssystem 10 das eine dynamoelektrische Maschine 1 aufweist, die über einen Umrichter 8 gespeist wird, der eine Regeleinheit 20 beinhaltet. Die dynamoelektrische rotatorische Maschine 1, die sowohl einen Motor als auch einen Generator beinhalten kann, hat einen Stator 2, der aus axial geschichteten Blechen 9 aufgebaut ist und zu einem Luftspalt 5 gerichtete Nuten aufweist. In den Nuten des Stators 2 ist ein Wicklungssystem 3 angeordnet, das an den Stirnseiten des Stators 2 Wickelköpfe ausbildet. Von dem Luftspalt 5 radial beabstandet ist ein Rotor 4 drehfest mit einer Welle 6 verbunden. Die Welle 6 treibt über eine Kupplung eine nicht näher dargestellte Arbeitsmaschine an. Des Weiteren ist an der Welle 6 ggf. eine Bremse vorgesehen.

Der Rotor 4 kann als Kurzschlussläufer ausgebildet sein. Der Rotor kann ebenso mit Permanentmagneten versehen sein. Unabhängig davon, ist der Rotor 4 vorzugsweise aus axial geschichteten Blechen 9 aufgebaut.

Durch elektromagnetische Wechselwirkung des bestromten Wicklungssystems 3 des Stators 2 mit dem Rotor 4 wird der Rotor 4 um eine Achse 7 in Rotation versetzt.

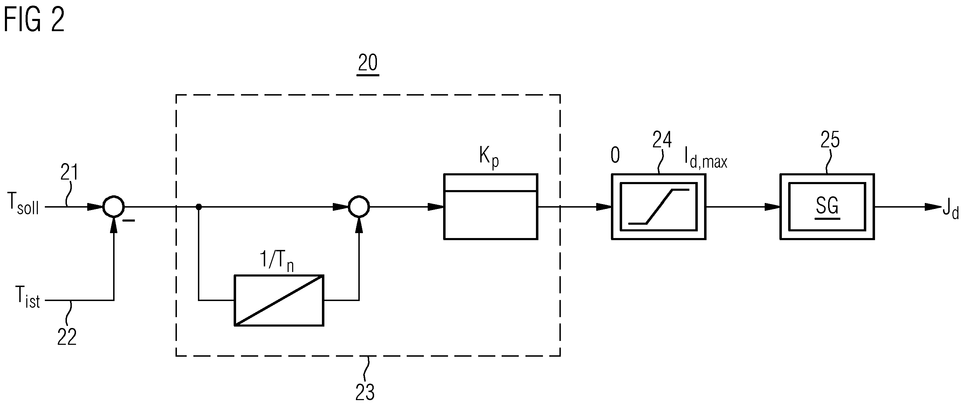

FIG 2 zeigt einen Regelkreis der Heizfunktion. Die Ist-Temperatur 22 wird mittels interner und/oder externer Sensoren und/oder einem Temperaturmodell einer Regeleinheit 20 zur Verfügung gestellt.

Mithilfe eines Soll-/Istwert-Vergleichs von Ist-Temperatur 22 und Soll-Temperatur 21 wird die auszuregelnde Temperaturdifferenz bestimmt. Diese Temperaturdifferenz wird einem PI-Regler 23 zur Verfügung gestellt. Von diesem PI-Regler 23 vorgegebene Strom-Amplitude 24 für einen feldbildenden Strom wird anschließend über einen einstellbaren Maximalstrom begrenzt.

Die Amplitude wird nun mittels eines Sinus-Generators 25 in einen Wechselstrom umgewandelt. Dieser ermöglicht eine besonders schnelle Erwärmung des Rotors 4 bzw. der Sekundärseite der dynamoelektrischen Maschine 1, da durch das wechselnde Feld nicht nur elektrische Verluste im Stator 2, sondern auch Wirbelstromverluste im Rotor 4 zur Wärmeentwicklung, insbesondere des Rotors 4 beitragen.

Mittels dieses Verfahrens wird nunmehr ein feldbildender Wechselstrom verwendet, der gewollt zusätzliche Wirbelstromverluste im Rotor 4 erzeugt und dadurch zu einer schnelleren Erwärmung des Rotors 4 führt.

Der erfindungsgemäß eingesetzte Sinus-Generator 25 arbeitet aus Gründen der Effizienz beispielsweise mit einer numerischen Approximation mittels Taylor-Reihen-Entwicklung.

Durch Benutzung einer vorgebbaren Abschaltschwelle, kann eine Motorfunktion und eine zusätzlich Heizfunktion gleichzeitig benutzt werden. In Abhängigkeit des momentenbildenden Stroms kann der von der Temperatur-Regelung berechnete feldbildende Wechselstrom wahlweise einprägt werden, um die dynamoelektrische Maschine 1, insbesondere einen Motor nicht unnötig zusätzlich zu heizen, was ggf. zu einem erhöhten Kühlaufwand führen könnte.

Durch diese Einführung der Abschaltschwelle des momentenbildenden Stroms ist somit ein gleichzeitiger Betrieb der Heiz- und Motorfunktion möglich. Die Abschaltschwelle ermöglicht im Gegensatz zur Verwendung von mehreren Betriebsmodi auch eine Temperaturregelung im laufenden Betrieb der dynamoelektrischen Maschine 1. Wenn im normalen Betrieb das zu stellende Drehmoment klein genug ist und damit auch der momentenbildende Strom unterhalb der Abschaltschwelle liegt, wird automatisch die Temperaturregelung freigegeben und ein passender feldbildender Strom 26 eingeprägt.

Somit kann bei geringen aufzubringenden Momenten und im Teillastbereich während des normalen Motor-Betriebs über einen zusätzlichen feldbildenden Strom geheizt werden. Für diesen gleichzeitigen Betrieb kann alternativ ggf. der Sinus-Generator 25 ausgeschaltet werden, um einen feldbildenden Gleichstrom einzuprägen.

Die PI-Regelung 23 ermöglicht im Vergleich zur Zweipunktregelung ein Ausregeln der Temperatur auf eine konstante Solltemperatur 21. Damit wird die Gefahr reduziert, dass der Motor überhitzt, indem bereits vor Erreichen der Solltemperatur der feldbildende Strom reduziert wird.

Erfindungswesentlich ist dabei eine Erfassung einer Ist-Temperatur/Modelltemperatur 21,22, eine Bestimmung einer Temperaturdifferenz, ein geschlossener Regelkreis für Heizfunktion, also eine Temperaturregelung, eine Wechselstromeinprägung mit Sinus-Generator 25 für die Heizfunktion, und optional ein ggf. zeitgleicher motorischer Betrieb und Heizbetrieb.

Eine derartige umrichterbasierte Heizfunktion einer dynamoelektrischen Maschine wird insbesondere bei Antriebssystemen 10 von Produktionsmaschinen, Werkzeugmaschinen, Windkraftanlagen, Kompressor-, Lüfter- und Pumpenanwendungen, als auch bei Industrierobotern, Prüfstände, Klimakammeranwendungen und Transportsystemen eingesetzt, um einen energieeffizienten Betrieb zu gewährleisten.

## Patentansprüche

1. Antriebssystem (10) mit zumindest einer dynamoelektrischen Maschine (1) und einem Umrichter (8), wobei der Umrichter (8) eine Regelungseinheit (20) mit einer feldorientierten Regelung aufweist, die momentenbildende und/oder feldbildende Stromkomponenten der dynamoelektrischen Maschine (1) zur Verfügung stellt, wobei über Temperaturdaten (21,22) der dynamoelektrischen Maschine (1) oder deren Komponenten die auszuregelnde Temperaturdifferenz bestimmbar ist.

2. Antriebssystem (10) mit zumindest einer dynamoelektrischen Maschine (1) und einem Umrichter (8) nach Anspruch 1, **dadurch gekennzeichnet, dass** die Temperaturdaten (21, 22) über interne und/oder externe Sensoren und/oder ein Temperaturmodell bereitgestellt sind.

3. Antriebssystem (10) mit zumindest einer dynamoelektrischen Maschine (1) und einem Umrichter (8), nach einem der vorhergehenden Ansprüche, **dadurch gekennzeichnet, dass** die Regelungseinheit (20) einen Sinusgenerator (25) aufweist.

4. Verfahren zur Temperaturregelung einer dynamoelektrischen Maschine (1) als Teil eines Antriebssystems (10) mit zumindest einem Umrichter (8), insbesondere Erwärmung der dynamoelektrischen Maschine (1),
wobei der Umrichter (8) eine Regelungseinheit (20) mit einer feldorientierten Regelung aufweist, die der dynamoelektrischen Maschine (1) momentenbildende und feldbildende Stromkomponenten zur Verfügung stellt,
wobei über Temperaturdaten (21, 22) der dynamoelektrischen Maschine (1) eine auszuregelnde Temperaturdifferenz bestimmt wird,
wobei durch ein Soll-/Istwertvergleich (21,22) die auszuregelnde Temperaturdifferenz bestimmt wird,
wobei durch die Regelung, insbesondere einen PI-Regler (23) eine Amplitude des feldbildenden Stromes vorgegeben wird.

5. Verfahren zur Temperaturregelung einer dynamoelektrischen Maschine (1) nach Anspruch 4, **dadurch gekennzeichnet, dass** die Amplitude des feldbildenden Stromes auf einen Maximalstrom begrenzt wird.

6. Verfahren zur Temperaturregelung einer dynamoelektrischen Maschine (1) nach Anspruch 5, **dadurch gekennzeichnet, dass** die Amplitude mittels eines Sinusgenerators (25) in einen Wechselstrom einstellbarer Amplitude und/oder Frequenz gewandelt wird.

7. Verwendung eines Antriebssystems (10) nach einem der Ansprüche 1 bis 3 mit zumindest einer dynamoelektrischen Maschine (1) und zumindest einem Umrichter (8) bei rotatorischen Maschinen und/oder Linearmaschinen mit einem Verfahren zur Temperaturregelung nach einem der Ansprüche 4 bis 6, in Produktionsmaschinen, Werkzeugmaschinen, Windkraftanlagen, Kompressor-, Lüfter- und Pumpenanwendungen, Industrierobotern, Prüfständen, Klimakammeranwendungen und Transportsystemen.
